# FASCICULE DE BREVET EUROPEEN

(11) **EP 3 954 584 B1**
(45) Date de publication et mention de la délivrance du brevet: **29.05.2024**
(21) Numéro de dépôt: 21180539.5
(22) Date de dépôt: 21.06.2021
(51) Int. Cl.: B60R 21/34, B60R 13/08

(54) **CONVERGENT INFÉRIEUR D'UN BOUCLIER AVANT D'UN VÉHICULE AUTOMOBILE**
UNTERER RAND EINES VORDEREN STOSSFÄNGERS EINES KRAFTFAHRZEUGS
LOWER CONVERGENT OF A FORWARD SHIELD FOR A MOTOR VEHICLE

(30) Priorité: 11.08.2020 FR 2008425
(43) Date de publication de la demande: 16.02.2022
(73) Titulaire: Renault s.a.s, 92100 Boulogne Billancourt (FR)
(72) Inventeur: LANGLOIS, Sebastien-Jacques, 78180 MONTIGNY LE BRETONNEUX (FR); OUDDANE, Abdelhak, 78280 GUYANCOURT (FR); PEAN, Frederic, 78210 Saint Cyr L'école (FR)
(74) Mandataire: Renault Group

(56) Documents cités:
- DE-A1- 10 349 743
- DE-A1-102007 002 209
- DE-A1-102010 063 288
- DE-A1-102012 013 692

## Description

L'invention se rapporte à un convergent inférieur de bouclier avant, se situant dans la zone basse sous caisse d'un véhicule automobile.

L'avant d'un véhicule automobile est aménagé notamment pour assurer la protection des piétons lors d'accidents. Les constructeurs automobiles ont ainsi développé des véhicules dont la partie avant est équipée d'un bouclier avant (pare-chocs avant), qui permet de limiter les blessures du piéton en cas de choc. Une telle partie avant de véhicule comprend en particulier un convergent inférieur de bouclier avant. Un tel élément convergent a notamment pour fonction d'apporter de l'aérodynamisme en évitant les phénomènes de recirculation d'air en dessous du véhicule et de limiter les perturbations de flux d'air allant jusqu'à l'ensemble de refroidissement du moteur. Il est usuellement situé derrière le bouclier avant, en partie inférieure de celui-ci, et s'étend sensiblement sur toute sa largeur.

Ce convergent inférieur est défini en premier lieu pour répondre à des contraintes d'architecture du véhicule. Ces contraintes sont liées par exemple à la garde au sol permettant d'éviter un endommagement du bouclier avant avec un trottoir, à l'agencement d'une face avant technique dans le compartiment moteur, ou encore à l'installation de guides d'air pour assurer le refroidissement du radiateur.

Toutefois, lors d'un choc frontal avec un piéton, le contact entre ce dernier et le véhicule s'établissant le plus souvent au niveau de la partie basse du bouclier avant, le convergent inférieur peut jouer un rôle dans la protection du piéton, dans la mesure où des essais sur ce type de chocs ont montré que d'importantes blessures sur les jambes des piétons, notamment par flexion ou rotation de la jambe, peuvent être évitées en répartissant les efforts au mieux entre tibia et fémur grâce à un appui bas relativement rigide. Il est préférable que le pare-chocs heurte la jambe bien en dessous du genou car les opérations chirurgicales du genou sont plus complexes qu'une opération visant à réparer le tibia ou le péroné.

La protection des membres inférieurs d'une personne qui se trouverait heurtée à l'avant du véhicule comme évoqué ci-dessus est évaluée grâce à des essais de simulation d'impact réalisés dans le cadre de règlementations ou de protocoles de consommateurs ou d'assureurs.

Des dispositions règlementaires et les tests RCAR (acronyme de Research Council for Automobile Repairs), ont notamment renforcé les exigences sur la protection des membres inférieurs en introduisant un nouveau modèle d'impacteur instrumenté représentant une jambe simplifiée, dit Flex-PLI (pour Flexible Pedestrian Leg form Impactor), et qui est projetée sur l'avant du véhicule. Cet impacteur constitué par un modèle de jambe factice complète de piéton (FLEX-PLI) dit « jambe flex-pli » ou un modèle dit « tibia Flex-pli » exige une raideur importante au niveau de la voie basse du véhicule. Ceci nécessite donc de concevoir un convergent inférieur du bouclier avant qui présente une grande raideur.

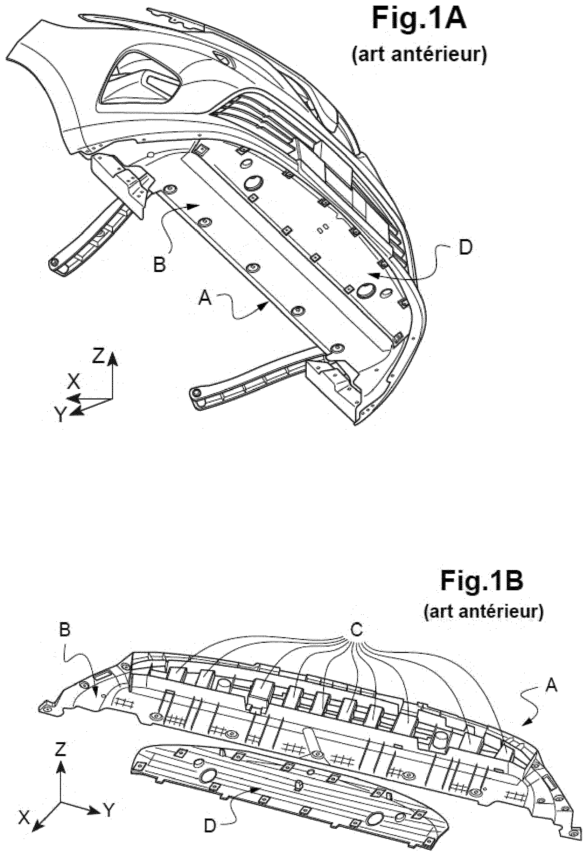

A cette fin, il a par exemple été proposé une solution ajoutant des créneaux au niveau du convergent inférieur, les créneaux venant prendre appui sur la face avant technique (FAT), qui offre une raideur suffisante pour s'opposer au mouvement de recul du convergent. Les figures 1A et 1B illustrent un exemple de cet art antérieur visant à répondre à ce besoin de raideur sur le convergent inférieur d'un bouclier avant d'un véhicule automobile. La figure 1A représente selon une vue en perspective depuis le dessous, un ensemble bouclier avant comprenant un convergent inférieur A caréné, le convergent caréné étant représenté en figure 1B selon une vue en perspective éclatée. Selon cet art antérieur, ledit convergent A est réalisé en une pièce monobloc B, incluant des créneaux C qui apportent de la raideur au convergent. La forme et le nombre de ces créneaux est fonction de l'énergie à absorber face au modèle d'impacteur considéré. Ladite pièce monobloc B est par exemple en plastique injecté, notamment en polypropylène (PP) injecté ou en matière bicomposant injecté PP et EPDM (Ethylène-Propylène-Diène Monomère). Par exemple une telle pièce monobloc est réalisée en une matière bicomposant PP/EPDM injecté, et elle peut avoir une masse supérieure à 1,8 kg, par exemple 1855 grammes (masse volumique 0,950 soit 950 g/l).

La présence des créneaux C nuisant à la performance aérodynamique dudit convergent inférieur, un carénage D est ajouté en face inférieure de la pièce monobloc dudit convergent A comprenant les créneaux C, comme illustré par la figure 1B. Ce carénage D guide l'air. Il peut être en PP injecté et avoir par exemple une masse de plus de 400 grammes, par exemple 425 grammes. Au total le convergent avec carénage a donc une masse de plus de 2 kg.

Un inconvénient d'un convergent inférieur selon l'art antérieur est son poids alors que l'on recherche à alléger les véhicules pour notamment diminuer leur consommation énergétique.

L'invention vise à résoudre, au moins en partie, cet inconvénient. Elle vise notamment à fournir un convergent inférieur de bouclier avant répondant aux exigences réglementaires sur les chocs piétons, notamment aux tests avec l'impacteur « FLEX-PLI », tout en maintenant ces autres fonctions.

Le document DE 10 2010 063288 A1 décrit également un convergent inférieur d'un ensemble bouclier avant d'un véhicule automobile, le convergent comprenant un insert à structure ajourée et un matériau polymère expansé formant une partie pleine dudit convergent, ledit insert étant au moins partiellement intégré dans ledit matériau polymère expansé.

A cet effet, l'invention propose un convergent inférieur d'un ensemble bouclier avant d'un véhicule automobile qui comprend un insert à structure ajourée et un matériau polymère expansé formant une partie pleine dudit convergent, ledit insert étant au moins partiellement intégré dans ledit matériau polymère expansé.

On entend par matériau polymère expansé, un matériau cellulaire comprenant une phase polymère solide formant une matrice rigide et une phase gazeuse dispersée et emprisonnée dans ladite matrice. Un tel matériau expansé est parfois aussi appelé « mousse ».

Un tel convergent inférieur présente une réduction de masse par rapport à ceux de l'art antérieur tout en étant suffisamment rigide pour répondre aux critères de tests de chocs piéton.

De préférence selon l'invention, ledit matériau polymère expansé est surmoulé audit insert, au moins suivant la forme dudit insert depuis sa partie avant.

De préférence, ladite partie pleine du convergent représente au moins 50% de la surface dudit convergent, en particulier au moins 60%, en particulier encore au moins 70 %, par exemple 75% à 90 %.

De préférence selon l'invention, ledit matériau polymère expansé est un polypropylène expansé.

De préférence, ledit matériau polymère expansé a une masse volumique comprise entre 30 g/l et 90 g/l, de préférence entre 35 et 85 g/l, ou encore entre 40 et 80 g/l.

De préférence selon l'invention, ledit insert est en matière polymère injectée, et de préférence ladite matière comprend du polypropylène injecté

Selon un mode de réalisation préféré de l'invention, ledit insert comprend un bord transversal avant et un bord transversal arrière, et une pluralité de bandes de cohésion espacées les unes des autres suivant la direction transversale du convergent et s'étendant entre ledit bord avant et ledit bord arrière. De préférence au moins une desdites bandes de cohésion est totalement noyée dans ledit matériau polymère expansé ou partiellement affleurante dans ledit matériau polymère expansé. Par exemple certains desdites bandes peuvent être totalement noyées et d'autres partiellement affleurantes, ou toutes totalement noyées ou toutes partiellement affleurantes.

Avantageusement selon l'invention, ledit insert comprend un bord transversal avant et un bord transversal arrière décalés selon la direction verticale dudit convergent de manière à définir une partie pleine formée d'une première partie pleine et d'une deuxième partie pleine selon la direction longitudinale du convergent qui sont décalées selon la direction verticale, la jonction entre lesdites première et deuxième parties pleines formant un muret d'appui en cas de choc. Ledit muret est apte à venir en appui contre l'avant de la face avant technique que comprend un véhicule récepteur dudit convergent en cas de choc frontal de manière à transmettre les efforts de poussée engendrés par le choc, notamment un choc piéton.

Avantageusement selon l'invention, au moins une desdites bandes de cohésion comprend au moins un orifice traversant empli dudit matériau polymère expansé. Cet orifice, de préférence plusieurs, permet(tent) aussi de laisser passer de la matière constitutive du matériau expansé de part et d'autre de la bande lors de la fabrication du convergent, de sorte que ladite bande de cohésion peut être bien intégrée dans le matériau expansé.

Avantageusement selon l'invention, lesdites bandes de cohésion ont des formes présentant au moins une barre de rétention du matériau expansé.

En particulier lesdites formes sont choisies parmi les formes en U, en oméga , en T , lesdites lettres citées pouvant en outre être de formes droites ou renversées. On entend par « formes droites» que ces formes de lettre sont disposées dans le sens usuel de lecture de la lettre, et par « formes renversées» que la lettre est disposée tête en bas, comme cela est expliqué plus loin dans des exemples de réalisation.

De préférence lesdites formes droites et renversées sont alternées pour des bandes de cohésion successives, autrement dit l'une des bandes présente une des formes de lettres citées par exemple dans sa forme droite de la lettre et la bande adjacente présente cette lettre dans sa forme renversée. Ceci permet de retenir le matériau expansé à la fois en face supérieure du convergent et en face inférieure du convergent.

L'invention concerne aussi un ensemble bouclier avant d'un véhicule automobile comprenant un convergent inférieur monté à l'arrière de la traverse du bouclier, ledit convergent inférieur étant tel que décrit précédemment.

L'invention concerne aussi le procédé de fabrication du convergent par surmoulage du matériau expansé sur l'insert en présence d'air chaud comprimé et de vapeur d'eau.

D'autres particularités et avantages de l'invention ressortiront à la lecture de la description faite ci-après de modes de réalisation particuliers de l'invention, donné à titre indicatif mais non limitatif, en référence aux dessins annexés.
[Fig. 1A] représente schématiquement, suivant une vue en perspective et de dessous, une partie avant de véhicule avec un ensemble bouclier avant comprenant un convergent inférieur avec un carénage, selon l'art antérieur.
[Fig. 1B] représente schématiquement, suivant une vue en perspective et en éclaté, le convergent inférieur avec carénage, de l'ensemble bouclier illustré en figure 1, selon l'art antérieur.
[Fig. 2] représente schématiquement selon une vue en perspective de trois-quarts, un convergent inférieur selon l'invention d'un ensemble bouclier avant.
[Fig. 3] représente selon une vue en perspective depuis le dessous, un ensemble bouclier avant comprenant un convergent inférieur tel qu'illustré en figure 2 .
[Fig. 4] représente schématiquement selon une vue en coupe dans le plan longitudinal au niveau d'une portion de bande de cohésion de l'insert, l'agencement d'un bouclier avant comprenant un convergent inférieur selon l'invention, tel qu'illustré en figure 2, et la face avant technique d'un véhicule automobile.
[Fig. 5] représente l'insert d'un convergent inférieur tel qu'illustré en figure 2.
[Fig. 6] représente schématiquement une vue en coupe dans le plan transversal au niveau d'une portion de bande de cohésion de l'insert d'un convergent inférieur selon l'invention.
[Fig. 7] illustre schématiquement une variante de forme des bandes de cohésion, selon une vue en coupe dans le plan transversal au niveau d'une portion de bande de cohésion de l'insert d'un convergent inférieur selon l'invention.
[Fig. 8] illustre schématiquement une autre variante de forme des bandes de cohésion, selon une vue en coupe dans le plan transversal au niveau d'une portion de bande de cohésion de l'insert d'un convergent inférieur selon l'invention.
[Fig. 9] illustre schématiquement une autre variante de forme des bandes de cohésion, selon une vue en coupe dans le plan transversal au niveau d'une portion de bande de cohésion de l'insert d'un convergent inférieur selon l'invention.

Les orientations exprimées dans la description des figures sont données en référence au repère XYZ classique d'un véhicule dans lequel X représente la direction longitudinale avant-arrière du véhicule, orientée vers l'arrière, Y la direction transversale du véhicule, orientée vers la droite, et Z la direction verticale orientée vers le haut du véhicule.

Des références identiques peuvent être utilisées d'une figure à l'autre pour désigner des éléments identiques ou similaires, ou augmenter du sigle prime ou seconde, notamment pour la description de différentes formes des bandes de cohésion.

Les figures 1A et 1B relatives à l'art antérieur ont été commentées en introduction de la description.

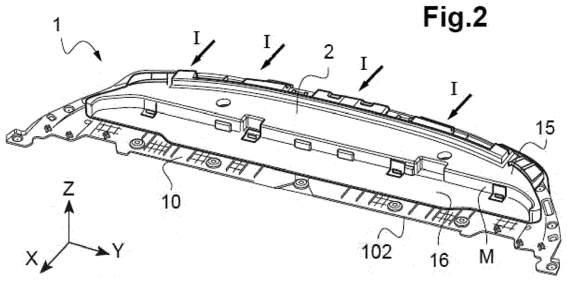

Comme illustré par la figure 2 selon une vue en perspective, le convergent inférieur 1 selon l'invention comprend une pièce monobloc formant un insert 10 et un matériau expansé 2 dans lequel est intégré au moins partiellement ledit insert 10 pour former une partie pleine, dite aussi partie massive ou compacte. Le matériau expansé peut donc à la fois être d'un côté et de l'autre dudit insert 10, et y compris à travers la matière constitutive dudit insert. Cette partie massive comprenant le matériau expansé s'étend suivant une partie importante de l'insert, sur environ les trois-quarts de sa surface, depuis l'avant dudit insert vers l'arrière.

Ledit insert 10 est en matière plastique injectée, par exemple en polypropylène injecté, matière relativement dure. Il est réalisé par moulage de polypropylène liquide injecté. Ladite partie massive comprend un matériau expansé qui est selon l'exemple préféré en polypropylène expansé (noté PP-E ou EPP). Elle est réalisée par surmoulage de l'insert 10, à partir de billes de EPP qui sont traitées par soufflage d'air chaud comprimé et agglomérées entre elles à l'aide de vapeur d'eau.

La partie pleine comprenant le matériau expansé est relativement volumineuse car elle peut avoir une forte épaisseur, par exemple comprise entre 4 et 40 mm. Elle permet donc d'avoir un convergent avec un bon aérodynamisme, puisque qu'il comporte une partie pleine, donc sans cavités perturbatrices des flux d'air, mais au contraire qui guide les flux d'air.

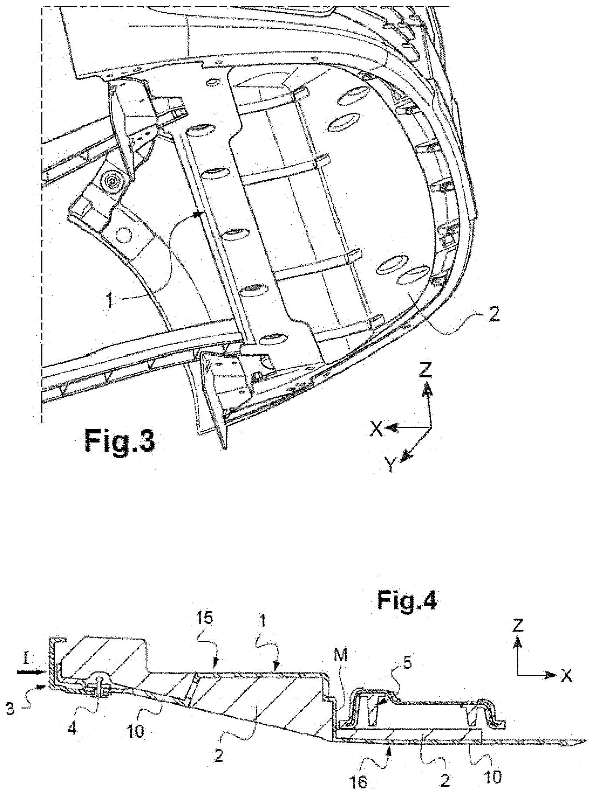

Le bon aérodynamisme et la raideur requise pour le choc piéton sont aussi dus au fait que cette partie pleine comprenant le matériau expansé occupe une part importante de la surface du convergent, comme on peut le voir aussi sur la figure 3 illustrant le convergent inférieur 1 monté sur l'ensemble bouclier avant de la partie avant d'un véhicule, en vue de dessous.

A titre d'exemple comparatif estimatif, un convergent avec carénage selon l'art antérieur en matière PP/EPDM injectée qui aurait une masse de l'ordre de 2 kg pour une épaisseur de 3 mm pourra être remplacé par un convergent de l'exemple suivant l'invention comprenant une partie pleine avec EPP qui aura une masse de 1 kg pour une épaisseur de 30 mm. Le convergent selon l'invention peut permettre un gain de masse jusqu'à au moins 50 % par rapport à l'art antérieur.

Si on reprend l'exemple du convergent inférieur de l'art antérieur décrit pour les figures 1A et 1B qui comprend une pièce monobloc en matière bicomposant PP/EPDM injecté (masse volumique de 0,950 soit 950 g/l) qui a une masse de 1 855 g, ce convergent peut être remplacé par un convergent inférieur selon l'invention comprenant un matériau expansé EPP qui a une masse totale de 1050 g, soit un gain masse par rapport à la pièce monobloc seule de 805 g, l'insert en bicomposant PP/ EPDM injecté (masse volumique 0,950) ayant une masse de 810g et la masse du matériau expansé EPP correspondant à 240 g pour une masse volumique 0,040 (40g/l). Pour un même insert de 810g selon la masse volumique de l'EPP utilisé, par exemple un EPP plus rigide de masse volumique 80g/l, le convergent aura une masse de 1290g (480g de matériau expansé), le gain masse est de 565 g.

En outre le gain peut être plus important si on prend en considération le carénage de 425 g de l'art antérieur, le gain masse est alors de 1230 g ou de 990 g selon la masse volumique 20g/l ou de 40g/l de l'EPP, soit au final, un gain masse respectivement de 54% et de 43%.

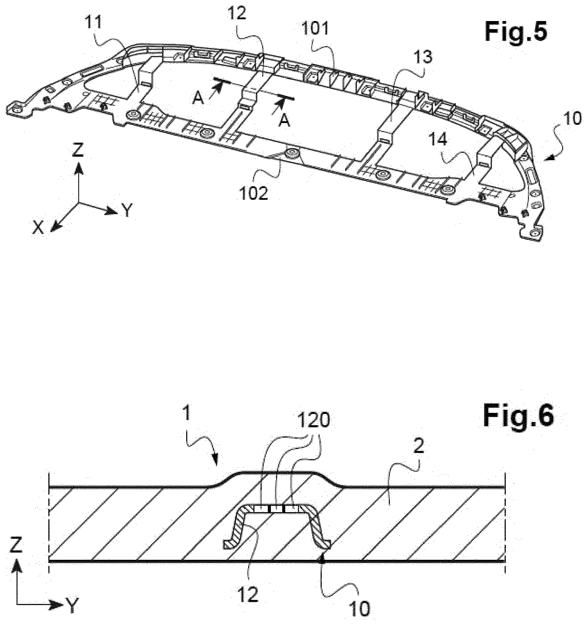

Comme illustré en figure 5, ledit insert 10 est une pièce ajourée comprenant un pourtour fermé constitué d'un bord transversal avant 101 et d'un bord transversal arrière 102 et de portions latérales reliant lesdits bords transversaux 101, 102. Lesdits bords transversaux avant 101 et arrière 102 sont espacés l'un de l'autre de sorte que ladite pièce est vide de matière à l'intérieur du périmètre défini par son pourtour, hormis des bandes de cohésion 11, 12, 13, 14, dites aussi lanières de cohésion, espacées les unes des autres selon la direction transversale Y, et qui s'étendent longitudinalement (direction X) d'un bord transversal à l'autre dans l'espace défini par ledit pourtour.

Sur cette figure 4, les bandes de cohésion sont illustrées dans une forme simplifiée, différentes variantes de formes étant illustrées aux figures 6 à 9.

Lesdits bords transversaux 101, 102 s'étendent suivant des plans sensiblement horizontaux (plan XY) mais décalés selon la direction verticale Z. De même une bande de cohésion ne s'étend pas dans un même plan horizontal entre lesdits bords transversaux.

Comme illustré schématiquement sur la figure 4 selon une vue en coupe longitudinale dans le plan XZ, et en liaison avec la figure 2, la configuration de l'insert 10 permet de définir des zones spécifiques réceptrices du matériau expansé surmoulé de ladite partie massive : une partie avant 15 et une partie arrière plus basse 16 que ladite partie avant. Le convergent inférieur est fixé au bouclier 3 par une attache 4 de type rivet par exemple. Lors d'un choc piéton frontal qui peut être modélisé par un impacteur de type « Flex-Pli » qui applique des forces de poussée « I » sur le bouclier 3 et tout l'ensemble bouclier, le convergent vient en appui contre l'avant de la face avant technique (FAT) 5 du véhicule automobile, au niveau de la zone d'interface entre ces deux parties avant 15 et arrière 16, c'est-à-dire au niveau d'un muret M formé par le décrochage entre les deux plans sensiblement horizontaux relatifs auxdites parties avant et arrière. Le convergent inférieur peut ainsi transmettre la poussée de l'impacteur vers la FAT.

En outre lesdites bandes de cohésion peuvent avoir des formes selon différentes variantes comme l'illustrent les figures 6 à 9 à titre d'exemples, de manière à répartir et retenir au mieux le matériau expansé 2 de la partie pleine.

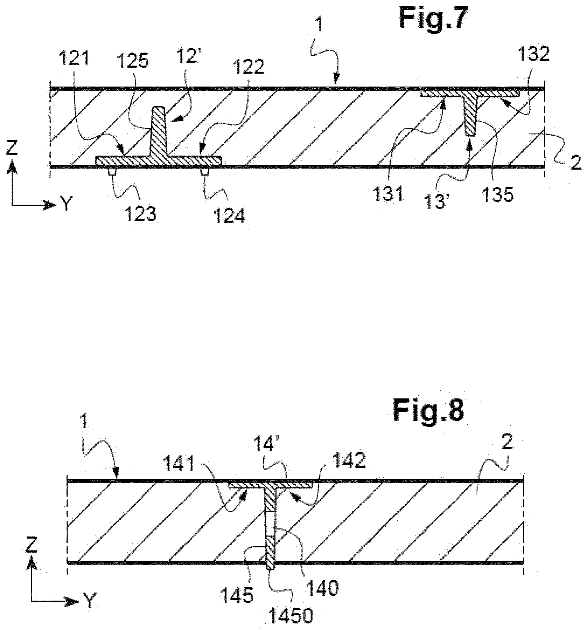

Les bandes de cohésion comprennent des trous traversants permettant à la matière constitutive du matériau expansé 2, de passer à travers elles lors du surmoulage de ladite matière. Ces trous permettent au matériau expansé d'être présent de part et d'autre des bandes de cohésion et aussi au sein desdites bandes. De tels trous traversants 120 sont illustrés en figure 6 selon une vue en coupe dans le plan transversal YZ (section AA), d'une portion de bande de la bande selon la direction verticale (Z) d'une bande de cohésion 12. Un autre exemple de trou traversant 140 pour le passage de matière est illustré en figure 8, dans une portion de bande de cohésion selon une variante de forme d'une bande de cohésion 14 comprenant une nervure, ledit trou se situant dans la nervure.

La figure 6 illustre schématiquement et partiellement en coupe transversale (plan YZ) un convergent inférieur 1 dont l'insert 10 comprend des bandes de cohésion de section droite en forme d'oméga et qui sont totalement noyées dans le matériau EPP. La surface de contact entre les matériaux constitutifs respectivement de l'insert, notamment des bandes de cohésion (PP injecté) et de l'EPP est maximale, ce qui améliore la liaison entre lesdits matériaux et donc la cohésion du convergent.

Ce type de forme en oméga contribue à transmettre les efforts de poussée entre le bouclier et la face avant technique, l'essentiel de ces efforts restant toutefois transmis par la partie EPP.

Cette forme en oméga peut néanmoins être partiellement affleurante et de manière plus ou moins débordante du matériau expansé, de la même manière qu'une forme en U décrite plus loin.

Les figures 7 et 8 illustrent l'insert 10 dans la partie pleine, selon une vue en coupe transversale dans le plan YZ d'une portion de bande de l'insert 10, des exemples de formes préférées en T pour des bandes de cohésion, ladite bande étant alors noyée dans le matériau expansé 2, quasi-totalement, seule une face de ladite bande étant affleurante.

La figure 7 illustre schématiquement et partiellement en coupe transversale (plan YZ) un convergent inférieur 1 dont l'insert 10 comprend des bandes de cohésion de section droite en forme de T. Ces bandes de cohésion 12', 13' comprennent une nervure 125, 135 représentée par la barre verticale du T. L'une des bandes 13' a une forme en T usuel (droit) de sorte que la barre transversale du T forme une barre de rétention transverse constituant deux murets latéraux 131, 132 de la barre verticale, et se situant au-dessus de ladite barre verticale formée par une nervure 135, la face supérieure de ladite barre de rétention transverse affleurant du matériau expansé, et ce du côté de la face supérieure du convergent. Ces murets latéraux transverses 131, 132 s'opposent à la remontée du matériau expansé. L'autre bande 12' a une forme en T renversé (tête en bas) de sorte que la barre transversale du T forme une barre de rétention transverse constituant deux murets latéraux 121, 122 de la barre verticale, et se situant au-dessous de ladite barre verticale formée par une nervure 125, la face supérieure de ladite barre de rétention transverse affleurant du matériau expansé, et ce du côté de la face inférieure du convergent, autrement dit sur la face opposée à celle où affleure la bande de cohésion 13' à section de forme en T droit. Ces murets latéraux transverses 121, 122 s'opposent à la descente du matériau expansé.

Une telle forme en T pour des bandes de cohésion permet une bonne rétention en direction verticale Z du matériau expansé car cette forme crée des barres de rétention transverses qui retiennent l'épaisseur complète dudit matériau expansé. En alternant le sens des bandes, on obtient une bonne rétention dudit matériau expansé entre les faces supérieure et inférieure du convergent, ou autrement dit à la fois vers le haut et vers le bas.

En outre la bande de cohésion 12' qui affleure du côté de la face inférieure du convergent, donc vers la route quand le convergent est monté sur un véhicule automobile, comprend selon l'exemple des nervures 123, 124 débordantes du matériau expansé, c'est-à-dire apparaissant en saillie sur la face inférieure du convergent. Ces petites nervures débordantes permettent de protéger le matériau expansé contre des frottements. Par exemple dans le cas de frottement du convergent inférieur avec une bordure de trottoir, ces nervures en saillie viennent contacter en premier le bitume ou le béton.

La figure 8 illustre schématiquement et partiellement en coupe transversale (plan YZ) un convergent inférieur dont l'insert 10 comprend au moins une bande de cohésion 14' de section droite en forme de T selon une variante. Selon cet exemple la bande 14' a une forme en T usuel (droit) de sorte que la barre transversale du T forme une barre de rétention transverse, subdivisé en deux murets latéraux 141, 142 de la barre verticale, et se situant au-dessus de ladite barre verticale formant la nervure 145, la face supérieure de ladite barre de rétention transverse affleurant du matériau expansé, et ce du côté de la face supérieure du convergent. La barre verticale du T qui forme une nervure 145 s'étendant jusqu'à et au-delà de l'autre face du convergent, c'est-à-dire jusqu'à être débordante du matériau expansé, son extrémité inférieure 1450 apparaissant ainsi en saillie de la face inférieure du convergent. Comme indiqué précédemment, les murets latéraux transverses 141, 142 permettent de retenir la matière constitutive dudit matériau expansé et s'opposent à la remontée du matériau expansé.

En outre comme indiqué plus haut, ladite nervure 145 comprend un trou traversant 140, par exemple sensiblement centré selon la direction verticale Z, qui laisse passer localement la matière constitutive du matériau expansé et se retrouve ainsi emplie dudit matériau, ce qui permet de renforcer la cohésion du convergent.

Ce type de forme en T des bandes de cohésion offre une bonne inertie du convergent inférieur, et permet de bien transmettre les efforts de poussée exercés par un impacteur, entre le bouclier et la face avant technique (FAT) du véhicule.

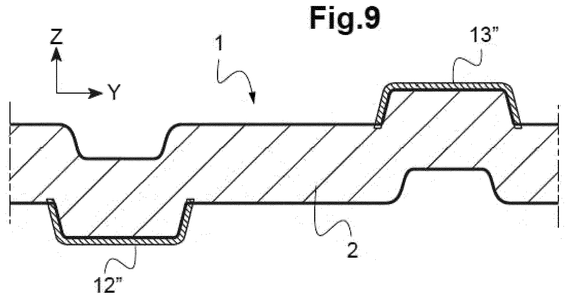

La figure 9 illustre un autre exemple de formes de bandes de cohésion dans la partie pleine, selon une vue en coupe transversale dans le plan YZ d'une portion de bande de l'insert 10, cette forme présentant une section en U droit 12" ou renversé (tête en bas) 13". Une telle forme en U pour une bande de cohésion permet une bonne rétention en direction verticale Z du matériau expansé. En alternant le sens des bandes U droit - U renversé, on obtient une bonne rétention dudit matériau expansé sur toute l'épaisseur du matériau expansé, entre les faces supérieure et inférieure du convergent.

En outre, la forme en U droit sera telle qu'elle soit placée en face inférieure du convergent. En effet par exemple dans le cas de frottement avec une bordure de trottoir, c'est cette bande de cohésion avec la forme en U droit débordant en Z sous le convergent qui viendra frotter en premier le bitume ou le béton. Ceci permet ainsi de protéger le matériau expansé qui peut être plus fragile au frottement que le PP injecté.

Comme pour les formes en T, la forme en U des bandes de cohésion offre une bonne inertie du convergent inférieur, et permet de bien transmettre les efforts de poussée exercés par un impacteur, entre le bouclier et la face avant technique

De manière générale, en fonction du niveau d'efforts à transmettre, il est possible de faire varier hauteur et largeur des formes des bandes de cohésion. En outre on peut faire varier le nombre de bandes de cohésion.

Le convergent inférieur selon l'invention qui comprend un insert au moins partiellement intégré dans un matériau expansé pour former une partie pleine, notamment dans de l'EPP, permet un gain de poids notable pour le véhicule l'intégrant, tout en conservant une excellente tenue structurelle. Ledit convergent offre une tenue mécanique et une résistance à la compression remarquable. De plus le coût de fabrication de la pièce est avantageux.

En outre un convergent inférieur de bouclier avant peut avoir une fonction de trappe d'accès et de maintien du bouclier à la caisse, ce que permet ledit convergent selon l'invention.

## Revendications

1. Convergent inférieur (A, 1) d'un ensemble bouclier avant d'un véhicule automobile, **caractérisé en ce qu'**il comprend un insert (10) à structure ajourée et un matériau polymère expansé (2) formant une partie pleine dudit convergent, ledit insert étant au moins partiellement intégré dans ledit matériau polymère expansé, et **en ce que** ledit insert (10) comprend un bord transversal avant (101) et un bord transversal arrière (102) décalés selon la direction verticale (Z) dudit convergent de manière à définir une partie pleine formée d'une première partie pleine (15) et d'une deuxième partie pleine (16) selon la direction longitudinale du convergent (X) qui sont décalées selon la direction verticale (Z), la jonction entre lesdites première et deuxième parties pleines formant un muret (M) d'appui en cas de choc.

2. Convergent inférieur selon la revendication 1, **caractérisé en ce que** ledit matériau polymère expansé (2) est surmoulé audit insert (10), au moins suivant la forme dudit insert depuis sa partie avant.

3. Convergent inférieur selon l'une des revendications 1 à 2, **caractérisé en ce que** ladite partie pleine du convergent représente au moins 50% de la surface dudit convergent, en particulier au moins 70 %.

4. Convergent inférieur selon l'une des revendications 1 à 3, **caractérisé en ce que** ledit matériau polymère expansé est un polypropylène expansé.

5. Convergent inférieur selon l'une des revendications 1 à 4, **caractérisé en ce que** ledit insert est en matière polymère injectée, et de préférence ladite matière comprend du polypropylène injecté.

6. Convergent inférieur selon l'une des revendications 1 à 5, **caractérisé en ce que** ledit insert comprend un bord transversal avant (101) et un bord transversal arrière (102), et une pluralité de bandes de cohésion (11, 12, 12', 12", 13,13', 13", 14,14') espacées les unes des autres suivant la direction transversale (Y) et s'étendant entre ledit bord transversal avant (101 ) et ledit bord transversal arrière (102), et au moins une desdites bandes de cohésion étant totalement noyée dans ledit matériau polymère expansé ou partiellement affleurante dans ledit matériau polymère expansé.

7. Convergent inférieur selon la revendication 6, **caractérisé en ce qu'**au moins une desdites bandes de cohésion (12, 14') comprend au moins un orifice traversant empli dudit matériau polymère expansé.

8. Convergent inférieur selon la revendication 6 ou selon la revendication 6 et la revendication 7, **caractérisé en ce que** lesdites bandes de cohésion ont des formes présentant au moins une barre de rétention du matériau expansé.

9. Convergent inférieur selon la revendication 8, **caractérisé en ce que** lesdites bandes de cohésion ont des formes en section droite choisies parmi les formes en U, en oméga , en T , droits ou renversés, et de préférence les formes droites et renversées étant alternées pour des bandes de cohésion successives.

10. Ensemble bouclier avant d'un véhicule automobile comprenant un convergent inférieur (A, 1) monté à l'arrière de la traverse du bouclier (3), **caractérisé en ce que** ledit convergent inférieur (1) est défini selon l'une des revendications 1 à 9. 1

## Patentansprüche

1. Unteres Konvergenzelement (A, 1) einer vorderen Stoßfängereinheit eines Kraftfahrzeugs, **dadurch gekennzeichnet, dass** es einen Einsatz (10) mit durchbrochener Struktur und ein geschäumtes Polymermaterial (2) umfasst, das einen festen Teil des Konvergenzelements ausbildet, wobei der Einsatz mindestens teilweise in das geschäumte Polymermaterial integriert ist, und **dass** der Einsatz (10) einen vorderen Querrand (101) und einen hinteren Querrand (102) umfasst, die in der vertikalen Richtung (Z) des Konvergenzelements versetzt sind, um einen festen Teil zu definieren, der aus einem ersten festen Teil (15) und einem zweiten festen Teil (16) in der Längsrichtung des Konvergenzelements (X) ausgebildet ist, die in der vertikalen Richtung (Z) versetzt sind, wobei die Verbindung zwischen dem ersten und dem zweiten festen Teil eine Trennwand (M) zur Auflage im Fall eines Aufpralls ausbildet.

2. Unteres Konvergenzelement nach Anspruch 1,
**dadurch gekennzeichnet, dass** das geschäumte Polymermaterial (2) an den Einsatz (10) angeformt ist, mindestens entsprechend der Form des Einsatzes von dessen vorderem Teil aus.

3. Unteres Konvergenzelement nach einem der Ansprüche 1 bis 2, **dadurch gekennzeichnet, dass** der feste Teil des Konvergenzelements mindestens 50 % der Oberfläche des Konvergenzelements, insbesondere mindestens 70 %, darstellt.

4. Unteres Konvergenzelement nach einem der Ansprüche 1 bis 3, **dadurch gekennzeichnet, dass** das geschäumte Polymermaterial ein geschäumtes Polypropylen ist.

5. Unteres Konvergenzelement nach einem der Ansprüche 1 bis 4, **dadurch gekennzeichnet, dass** der Einsatz aus gespritztem Polymermaterial besteht, und vorzugsweise das Material gespritztes Polypropylen umfasst.

6. Unteres Konvergenzelement nach einem der Ansprüche 1 bis 5, **dadurch gekennzeichnet, dass** der Einsatz einen vorderen Querrand (101) und einen hinteren Querrand (102) und eine Vielzahl von Kohäsionsstreifen (11, 12, 12, 12", 13, 13', 13", 14, 14'), die entlang der Querrichtung (Y) voneinander beabstandet sind und sich zwischen dem vorderen Querrand (101) und dem hinteren Querrand (102) erstrecken, umfasst und wobei mindestens einer der Kohäsionsstreifen vollständig in das geschäumte Polymermaterial eingebettet ist oder teilweise bündig mit dem geschäumten Polymermaterial abschließt.

7. Unteres Konvergenzelement nach Anspruch 6,
**dadurch gekennzeichnet, dass** mindestens einer der Kohäsionsstreifen (12, 14') mindestens eine Queröffnung umfasst, die mit dem geschäumten Polymermaterial gefüllt ist.

8. Unteres Konvergenzelement nach Anspruch 6 oder nach Anspruch 6 und 7, **dadurch gekennzeichnet, dass** die Kohäsionsstreifen Formen besitzen, die mindestens einen Balken zum Zurückhalten des geschäumten Materials aufweisen.

9. Unteres Konvergenzelement nach Anspruch 8,
**dadurch gekennzeichnet, dass** die Kohäsionsstreifen im Querschnitt Formen besitzen, die aus U-, Omega-, T-, geraden oder umgekehrten Formen ausgewählt sind, und wobei vorzugsweise die geraden und umgekehrten Formen bei aufeinanderfolgenden Kohäsionsstreifen abwechselnd vorliegen.

10. Vordere Stoßfängereinheit eines Kraftfahrzeugs, umfassend ein unteres Konvergenzelement (A, 1), das hinter dem Querträger des Stoßfängers (3) montiert ist, **dadurch gekennzeichnet, dass** das untere Konvergenzelement (1) nach einem der Ansprüche 1 bis 9 definiert ist.

## Claims

1. A lower convergent part (A, 1) of a front bumper assembly of a motor vehicle, **characterized in that** it comprises an insert (10) with an openwork structure and an expanded polymer material (2) forming a solid part of said convergent part, said insert being at least partially integrated into said expanded polymer material, and **in that** said insert (10) comprises a front transverse edge (101) and a rear transverse edge (102) offset in the vertical direction (Z) of said convergent part so as to define a solid part formed by a first solid part (15) and a second solid part (16) in the longitudinal direction of the convergent part (X) which are offset in the vertical direction (Z), the junction between said first and second solid parts forming a support wall (M) in the event of impact.

2. The lower convergent part according to claim 1, **characterized in that** said expanded polymer material (2) is overmolded to said insert (10), at least following the shape of said insert from its front part.

3. The lower convergent part according to one of claims 1 to 2,
**characterized in that** said solid part of the convergent part represents at least 50% of the surface of said convergent part, in particular at least 70%.

4. The lower convergent part according to one of claims 1 to 3,
**characterized in that** said expanded polymer material is an expanded polypropylene.

5. The lower convergent part according to one of claims 1 to 4,
**characterized in that** said insert is made of injected polymer material, and preferably said material comprises injected polypropylene.

6. The lower convergent part according to one of claims 1 to 5,
**characterized in that** said insert comprises a front transverse edge (101) and a rear transverse edge (102), and a plurality of cohesion strips (11, 12, 12', 12", 13, 13', 13", 14, 14') spaced from one another in the transverse direction (Y) and extending between said front transverse edge (101) and said rear transverse edge (102), and at least one of said cohesion strips being totally embedded in said expanded polymer material or partially flush in said foamed polymer material.

7. The lower convergent part according to claim 6, **characterized in that** at least one of said cohesion strips (12, 14') comprises at least one through hole filled with said expanded polymer material.

8. The lower convergent part according to claim 6 or according to claim 6 and claim 7, **characterized in that** said cohesion strips have shapes presenting at least one expanded material retention bar.

9. The lower convergent part according to claim 8, **characterized in that** said cohesion bands have cross-sectional straight shapes selected from U, omega, T, straight or inverted, and preferably straight and inverted shapes being alternated for successive cohesion bands.

10. A front bumper assembly for a motor vehicle comprising a lower convergent part (A, 1) mounted at the rear of the bumper cross member (3), **characterized in that** said lower convergent part (1) is defined according to one of claims 1 to 9.
